# DEMANDE DE BREVET EUROPEEN

(11) **EP 4 745 449 A1**
(43) Date de publication de la demande: **20.05.2026**
(21) Numéro de dépôt: 25213833.4
(22) Date de dépôt: 06.11.2025
(51) Int. Cl.: F17C 13/08, B64D 37/30, B64D 37/32, B64D 37/06

(54) **CAISSON CRYOGÉNIQUE CONTENANT AU MOINS UN ÉLÉMENT CRYOGÉNIQUE D'UN CIRCUIT D' HYDROGÈNE, AÉRONEF COMPRENANT AU MOINS UN TEL CAISSON**

(30) Priorité: 19.11.2024 FR 2412659
(71) Demandeur: AIRBUS OPERATIONS (S.A.S.), 31060 Toulouse (FR)
(72) Inventeur: GASTALDI, Umberto, 31060 TOULOUSE (FR); GACHES, Thierry, 31060 TOULOUSE (FR); MERLE, Matthieu, 31060 TOULOUSE (FR); GELIOT, Jean, 31060 TOULOUSE (FR)
(74) Mandataire: Fantin, Laurent

(57) **Abrégé**

L'invention a pour objet un caisson cryogénique comprenant au moins une enceinte (12), au moins un élément cryogénique (14) positionné dans l'enceinte (12) ainsi qu'au moins un système de liaison (18) comportant au moins un élément de liaison (22) reliant directement ou indirectement des premier et deuxième points d'ancrage (20.1, 20.2) solidaires respectivement de l'enceinte(12) et de l'élément cryogénique (14) ; caractérisé en ce que l'élément de liaison (22) forme un chemin de conduction thermique qui présente une longueur (D18) supérieure à une distance (D20), mesurée en ligne droite, séparant les premier et deuxième points d'ancrage (20.1, 20.2).

Cette solution permet d'augmenter le chemin de conduction thermique et ainsi de réduire la conduction thermique entre l'extérieur de l'enceinte (12) et l'élément cryogénique (14).

## Description

La présente demande se rapporte à un caisson cryogénique contenant au moins un élément cryogénique d'un circuit d'hydrogène ainsi qu'à un aéronef comprenant au moins un tel caisson.

Selon un mode de réalisation de l'art antérieur, un dispositif d'alimentation en hydrogène d'un aéronef comprend au moins un réservoir d'hydrogène ainsi que plusieurs circuits d'hydrogène présentant chacun au moins une extrémité amont reliée au réservoir d'hydrogène et au moins une extrémité aval reliée notamment à au moins un moteur à hydrogène ou à au moins une pile à combustible.

Chaque circuit d'hydrogène comprend des conduits ainsi que différents équipements comme des pompes, des capteurs, des vannes ou des échangeurs par exemple, reliés entre eux par les conduits. Les équipements et les conduits sont positionnés dans au moins un caisson cryogénique étanche à l'air dans lequel un gaz inerte est injecté ou un vide réalisé. Les équipements et/ou les conduits positionnés dans le caisson cryogénique sont reliés à ce dernier par au moins un système de liaison.

En fonctionnement, la température ambiante à l'extérieur du caisson cryogénique peut varier entre -50 à +100°C alors que la température de l'hydrogène présent dans l'équipement et le conduit doit être comprise entre -253°C et -235°C, en fonction de la pression, pour que l'hydrogène reste à l'état liquide.

En raison des phénomènes de dilatation induits par cette différence de température entre l'extérieur du caisson cryogénique et l'hydrogène, chaque système de liaison doit être configuré de manière à limiter l'introduction de contraintes au niveau des conduits et des équipements, ce qui tend à complexifier la conception du système de liaison.

Par ailleurs, du fait de ses propriétés de conduction thermique, chaque système de liaison provoque une élévation de température de l'hydrogène, présent dans l'équipement et le conduit, susceptible de provoquer un changement de phase de l'hydrogène.

Les documents US2022/290817A1, US4184609A et US2016/053941A1 décrivent chacun un caisson cryogénique selon l'art antérieur.

### EXPOSE DE L'INVENTION :

La présente invention vise à remédier à tout ou partie des inconvénients de l'art antérieur. A cet effet, l'invention a pour objet un caisson cryogénique selon la revendication 1.

Cette solution permet d'augmenter la longueur du chemin de conduction thermique entre les premier et deuxième points d'ancrage et ainsi de réduire la conduction thermique entre l'extérieur de l'enceinte et l'élément cryogénique.

Selon une autre caractéristique, le premier système de liaison comprend au moins un montant relié de manière rigide à l'élément cryogénique ainsi qu'au moins un système de fixation reliant le montant et le support.

Selon une autre caractéristique, le système de fixation comprend au moins un isolant thermique intercalé entre le montant et le support.

Selon une autre caractéristique, le système de fixation comprend un élément amortisseur configuré pour autoriser un léger débattement entre le montant et le support.

Selon une autre caractéristique, le deuxième système de liaison comprend au moins un premier couple de première et deuxième biellettes reliant le support et l'enceinte ainsi que des articulations reliant les première et deuxième biellettes au support et à l'enceinte, chaque articulation présentant au moins un axe de pivotement.

Selon une autre caractéristique, le deuxième système de liaison comprend :
- un couple de première et deuxième biellettes positionnées dans un même premier plan transversal, les axes de pivotement des articulations étant sensiblement parallèles entre eux et perpendiculaires au premier plan transversal,
- une liaison fixe positionnée dans un deuxième plan transversal distinct du premier plan transversal.

Selon une autre caractéristique, le deuxième système de liaison comprend, pour chaque support :
- un premier couple de première et deuxième biellettes positionnées dans un même plan longitudinal, les axes de pivotement des articulations des première et deuxième biellettes du premier couple étant sensiblement parallèles entre eux et perpendiculaires au plan longitudinal,
- un deuxième couple de première et deuxième biellettes positionnées dans des premier et deuxième plans transversaux, les axes de pivotement des articulations des première et deuxième biellettes du deuxième couple étant sensiblement parallèles entre eux et perpendiculaires aux plans transversaux.

Selon une autre caractéristique, le premier système de liaison comprend au moins un système de fixation relié au support et positionné dans un premier plan transversal, le deuxième système de liaison comprenant au moins une articulation le reliant au support et positionnée dans un deuxième plan transversal décalé par rapport au premier plan transversal.

Selon une autre caractéristique, le caisson cryogénique comprend au moins un boîtier cryogénique situé dans la zone intérieure du caisson cryogénique et dans lequel est positionné au moins un élément cryogénique.

Selon une autre caractéristique, le boîtier cryogénique comprend au moins deux demi-coques configurées pour occuper un état assemblé dans lequel les demi-coques sont reliées et forment une enceinte close et un état détaché dans lequel les demi-coques sont séparées ainsi qu'au moins un système de verrouillage/déverrouillage configuré pour occuper un état verrouillé dans lequel il maintient les demi-coques à l'état assemblé et un état déverrouillé dans lequel il permet aux demi-coques de passer de l'état assemblé à l'état détaché et inversement.

Selon une autre caractéristique, l'élément cryogénique positionné dans le boîtier cryogénique comprend au moins une première partie en contact avec un fluide cryogénique ainsi qu'au moins une deuxième partie qui n'est pas en contact avec le fluide cryogénique, l'élément cryogénique étant intégralement positionné dans le boîtier cryogénique.

Selon une autre caractéristique, l'élément cryogénique positionné dans le boîtier cryogénique comprend au moins une première partie en contact avec un fluide cryogénique ainsi qu'au moins une deuxième partie qui n'est pas en contact avec le fluide cryogénique, la première partie de l'élément cryogénique étant située à l'intérieur du boîtier cryogénique, la deuxième partie de l'élément cryogénique étant située à l'extérieur du boîtier.

Selon une autre caractéristique, le boîtier cryogénique contient un matériau thermiquement isolant dans lequel est positionné l'élément cryogénique.

L'invention a également pour objet un aéronef comprenant au moins un caisson cryogénique selon l'une des caractéristiques précédentes.

### DESCRIPTION DETAILLEE :

D'autres caractéristiques et avantages ressortiront de la description de l'invention qui va suivre, description donnée à titre d'exemple uniquement, en regard des dessins annexés parmi lesquels :
- La figure 1 est une coupe schématique transversale d'un caisson cryogénique contenant au moins un élément d'un circuit d'hydrogène illustrant un mode de réalisation,
- La figure 2 est une coupe schématique transversale d'un caisson cryogénique contenant au moins un élément cryogénique d'un circuit d'hydrogène illustrant un autre mode de réalisation,
- La figure 3 est une coupe schématique longitudinale d'un caisson cryogénique contenant au moins un élément cryogénique d'un circuit d'hydrogène illustrant un autre mode de réalisation,
- La figure 4 est une coupe schématique transversale d'un caisson cryogénique contenant au moins un élément cryogénique d'un circuit d'hydrogène illustrant un autre mode de réalisation,
- La figure 5 est une vue en perspective d'une partie d'un caisson cryogénique contenant au moins un élément cryogénique d'un circuit d'hydrogène illustrant un autre mode de réalisation de l'invention,
- La figure 6 est une coupe transversale d'une partie du caisson cryogénique visible sur la figure 5,
- La figure 7 est une coupe schématique longitudinale d'une partie du caisson cryogénique visible sur la figure 5,
- La figure 8 est une vue en perspective d'une partie d'un caisson cryogénique contenant au moins un élément cryogénique d'un circuit d'hydrogène illustrant un autre mode de réalisation de l'invention,
- La figure 9 est une coupe selon la ligne IX-IX de la figure 8 du caisson cryogénique visible sur la figure 8,
- La figure 10 est une vue de dessus d'un système liaison reliant un support et une enceinte du caisson cryogénique visible sur la figure 8,
- La figure 11 est une coupe schématique transversale d'un caisson cryogénique contenant au moins un élément cryogénique d'un circuit d'hydrogène illustrant un autre mode de réalisation de l'invention,
- La figure 12 est une vue en perspective d'un caisson cryogénique contenant au moins un élément cryogénique d'un circuit d'hydrogène illustrant un autre mode de réalisation de l'invention,
- La figure 13 est une vue en perspective d'un caisson cryogénique contenant au moins un élément cryogénique d'un circuit d'hydrogène illustrant un autre mode de réalisation de l'invention.

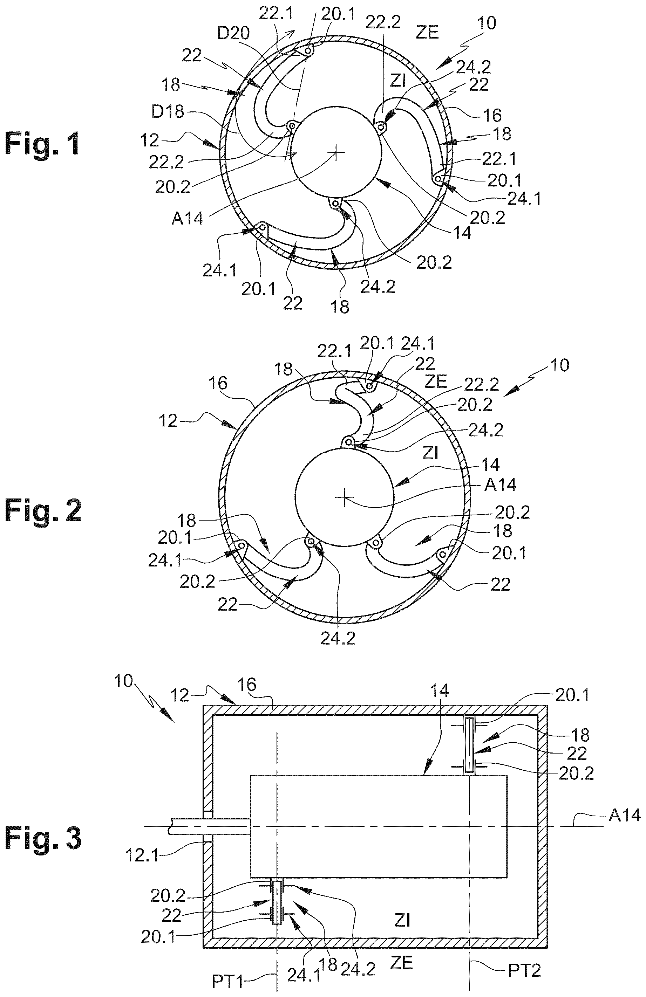

Selon des modes de réalisation non revendiqués visibles sur les figures 1 à 4, un caisson cryogénique 10 comprend au moins une enceinte 12 délimitant des zones intérieure et extérieure ZI, ZE ainsi qu'au moins un élément cryogénique 14, positionné dans la zone intérieure ZI, choisi parmi un conduit et un équipement.

Selon une application, un aéronef comprend au moins un dispositif d'alimentation en hydrogène comportant au moins un caisson cryogénique 10.

L'enceinte 12 est étanche à l'air. Elle contient un gaz inerte qui peut être de l'hélium ou de l'azote par exemple ou présente un vide donné qui correspond par exemple à un niveau de pression dans l'enceinte 12 à un seuil de pression choisi dans l'intervalle [1 x 10-7 mbar ; 10 mbar] selon le niveau d'exigence requis.

L'enceinte 12 est réalisée en au moins un matériau rigide. L'enceinte 12 comprend au moins un orifice traversant 12.1 configuré pour permettre le passage d'un élément cryogénique 14 comme un conduit par exemple.

Selon une configuration, l'élément cryogénique 14 s'étend selon un axe longitudinal A14. Selon un agencement, l'enceinte 12 comprend une paroi latérale 16 qui présente un axe de révolution parallèle ou confondu avec l'axe longitudinal A14.

Une direction longitudinale est parallèle à l'axe longitudinal A14. Un plan longitudinal contient l'axe longitudinal A14. Un plan transversal est perpendiculaire à l'axe longitudinal A14.

L'élément cryogénique 14 peut être identique à ceux d'un dispositif d'alimentation en hydrogène de l'art antérieur.

Le caisson cryogénique 10 comprend au moins un système de liaison 18 qui comporte au moins un premier point d'ancrage 20.1 solidaire de l'enceinte 12, au moins un deuxième point d'ancrage 20.2 solidaire de l'élément cryogénique 14, au moins une biellette 22 qui présente des première et deuxième extrémités 22.1, 22.2 reliées respectivement aux premier et deuxième points d'ancrage 20.1, 20.2, au moins une première articulation 24.1 reliant le premier point d'ancrage 20.1 et la première extrémité 22.1 de la biellette 22 ainsi qu'au moins une deuxième articulation 24.2 reliant le deuxième point d'ancrage 20.2 et la deuxième extrémité 22.2 de la biellette 22. Les premier et deuxième points d'ancrage 20.1, 20.2 sont positionnés sur une droite D20.

Selon une particularité, la biellette 22 présente une longueur D18 supérieure à une distance D20, mesurée en ligne droite, séparant les premier et deuxième points d'ancrage 20.1, 20.2, ce qui permet d'augmenter le chemin de conduction thermique entre les premier et deuxième points d'ancrage 20.1, 20.2 et ainsi de réduire la conduction thermique entre l'extérieur de l'enceinte 12 et l'élément cryogénique 14.

La biellette 22 présente une courbure et/ou plusieurs segments et ne suit pas la droite D20 passant par les premier et deuxième points d'ancrage 20.1, 20.2. Ainsi, la biellette 22 présente une longueur D18 supérieure à la distance D20 séparant les premier et deuxième points d'ancrage 20.1, 20.2 en ligne droite. Cette configuration permet d'augmenter le chemin de conduction thermique entre les premier et deuxième points d'ancrage 20.1, 20.2 et ainsi de réduire la conduction thermique entre l'extérieur de l'enceinte 12 et l'élément cryogénique 14.

Pour chaque système de liaison 18, la biellette 22 ainsi que les premier et deuxième points d'ancrage 20.1, 20.2 sont positionnés dans un plan transversal.

Le caisson cryogénique 10 comprend plusieurs systèmes de liaison 18 positionnés dans un même plan transversal et/ou plusieurs systèmes de liaison 18 positionnés dans des plans transversaux différents PT1, PT2 comme illustré sur la figure 3.

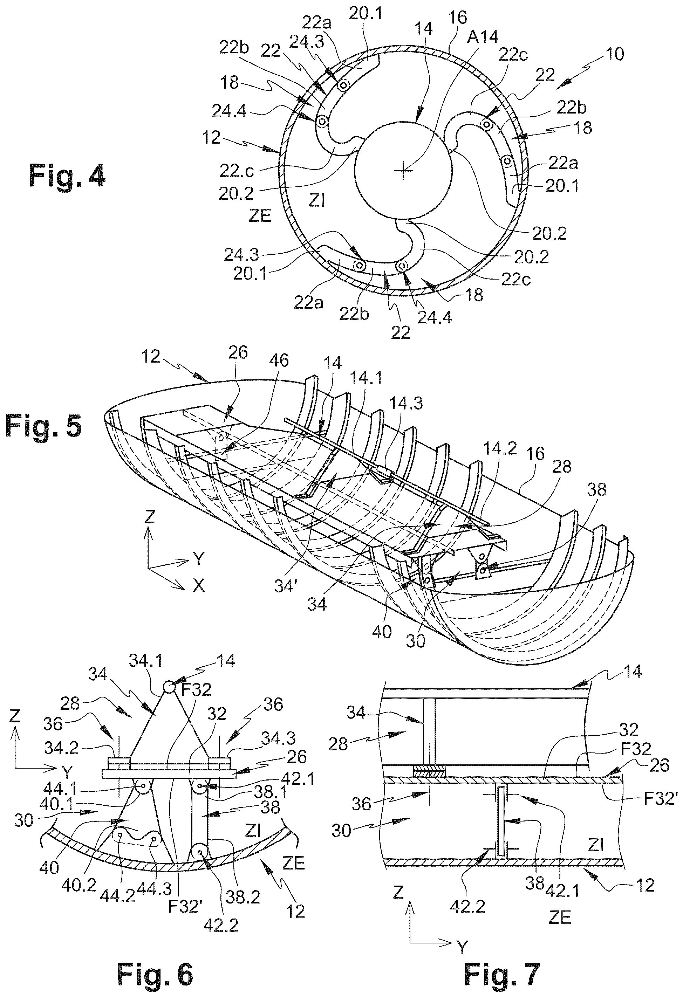

Selon une configuration, la biellette 22 est réalisée d'un seul tenant, comme illustré sur les figures 1 et 2, ou comprend plusieurs tronçons 22a, 22b, 22c reliés entre eux par au plus deux articulations comme illustré sur la figure 4.

Selon une première configuration, le premier tronçon 22a est relié à l'enceinte 12 au niveau du premier point d'ancrage 20.1 par une liaison fixe. Le troisième tronçon 22c est relié à l'élément cryogénique 14 au niveau du deuxième point d'ancrage 20.2 par une liaison fixe. Le deuxième tronçon 22b est relié au niveau de ses extrémités aux premier et troisième tronçons 22a, 22c par deux articulations intermédiaires 24.3, 24.4.

Selon une deuxième configuration, le premier tronçon 22a est relié à l'enceinte 12 au niveau du premier point d'ancrage 20.1 par une première articulation 24.1. Le troisième tronçon 22c est relié à l'élément cryogénique 14 au niveau du deuxième point d'ancrage 20.2 par une deuxième articulation 24.2. Le deuxième tronçon 22b est relié au niveau de ses extrémités aux premier et troisième tronçons 22a, 22c par des liaison fixes.

Selon les variantes, la biellette 22 est réalisée en un même matériau ou en des matériaux différents qui présentent des caractéristiques différentes, notamment en matière de conduction thermique. Ainsi, comme illustré sur la figure 4, au moins une biellette 22 comprend plusieurs tronçons 22a, 22b, 22c positionnés bout à bout, au moins un tronçon 22b étant réalisé en un premier matériau, au moins un autre tronçon 22a, 22c étant réalisé en un deuxième matériau, le premier matériau présentant une conductivité thermique inférieure à celle du deuxième matériau.

Selon un mode de réalisation, au moins une des articulations 24.1 à 24.4 comprend au moins un axe de pivotement. Selon une configuration, au moins une des articulations 24.1 à 24.4 est une liaison de type rotule et autorise un pivotement selon trois axes de pivotement orthogonaux. Pour au moins une biellette 22, les axes de pivotement des articulations 24.1 à 24.4 sont parallèles entre eux et perpendiculaires au plan transversal dans lequel est positionnée la biellette 22.

Quel que soit le mode de réalisation, les biellettes 22 et les articulations 24.1 à 24.4 sont configurées pour obtenir une liaison isostatique entre l'élément cryogénique 14 et l'enceinte 12, limitant la transmission de contraintes entre l'élément cryogénique 14 et l'enceinte 12.

Selon des modes de réalisation de l'invention visibles sur les figures 5 à 10, le caisson cryogénique 10 comprend au moins un support 26, un premier système de liaison 28 reliant l'élément cryogénique 14 et le support 26 ainsi qu'un deuxième système de liaison 30 reliant le support 26 et l'enceinte 12.

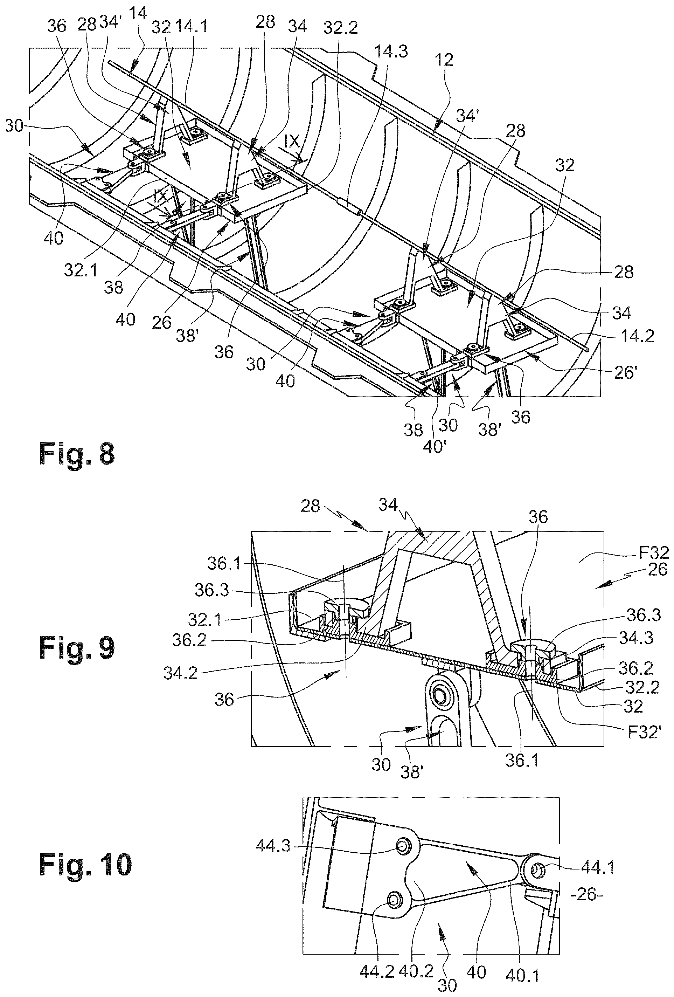

Selon une première variante visible sur la figure 5, le caisson cryogénique 10 comprend un seul support 26. Selon une deuxième variante visible sur la figure 8, le caisson cryogénique 10 comprend plusieurs supports 26, 26' espacés entre eux et répartis selon l'axe longitudinal X.

Selon une configuration, au moins un support 26, 26' comprend une plaque 32 qui présente des première et deuxième faces F32, F32' opposées ainsi que des côtés latéraux 32.1, 32.2 par exemple parallèles à l'axe longitudinal X.

Selon un mode de réalisation visible notamment sur les figures 6, 7 et 9, le premier système de liaison 28 comprend au moins un montant 34, par exemple de forme triangulaire, qui comporte un sommet 34.1 (correspondant au deuxième point d'ancrage 20.2) relié de manière rigide à l'élément cryogénique 14 ainsi que des première et deuxième pattes 34.2, 34.3 situées à chaque extrémité du côté opposé au sommet 34.1 de la forme triangulaire du montant 34. Le sommet 34.1 et les première et deuxième pattes 34.2, 34.3 sont positionnés dans un plan transversal. En complément, le premier système de liaison 28 comprend au moins un système de fixation 36 reliant le montant 34, plus précisément chacune des première et deuxième pattes 34.2, 34.3, et le support 26, 26'. Selon un agencement, les première et deuxième pattes 34.2, 34.3 sont en contact avec la première face F32 ou faiblement espacées de cette dernière. Selon une variante, au moins un montant 34 est un élément distinct de l'élément cryogénique 14. Selon d'autres variantes, au moins une partie du montant 34 est une partie de l'élément cryogénique 14.

Selon un mode de réalisation visible en détails sur la figure 9, le système de fixation 36 comprend au moins un boulon 36.1 (représenté de manière schématique en trait mixte) traversant le montant 34, plus précisément chaque patte 34.2, 34.3, et le support 26, 26' ainsi qu'au moins un isolant thermique 36.2, comme une bague par exemple, intercalé entre le montant 34, plus précisément chaque patte 34.2, 34.3, et le support 26, 26'. Selon une configuration, le système de fixation 36 comprend un élément amortisseur 36.3 intercalé entre le boulon 36.1 et la patte 34.2, 34.3 et configuré pour autoriser un léger débattement entre le montant 34 et le support 26, 26'. Cet élément amortisseur 36.3 est configuré en fonction de l'amplitude et/ou de la direction du débattement souhaité entre le montant 34 et le support 26, 26'. Bien entendu, l'invention n'est pas limitée à ce mode de réalisation pour le système de fixation 36. Ce dernier doit permettre d'obtenir un assemblage isostatique tout en permettant un contrôle du positionnement de l'élément cryogénique 14 sans introduire de contraintes. Ainsi, au moins un système de fixation 36 peut ne pas autoriser de débattement, au moins un système de fixation 36 peut autoriser un débattement selon une seule direction, en présence d'un trou traversant oblong pour loger la tige du boulon 36.1, et/ou au moins un système de fixation 36 peut autoriser un débattement selon plusieurs directions en présence d'un trou traversant, pour loger la tige du boulon 36.1, qui présente un diamètre supérieur à celui de la tige du boulon 36.1.

Selon un agencement, le premier système de liaison 28 comprend plusieurs montants 34, 34' parallèles entre eux et positionnés dans plusieurs plans transversaux.

Selon un mode de réalisation visible sur la figure 8, l'élément cryogénique 14 comprend au moins des premier et deuxième tronçons rigides 14.1, 14.2 reliés à des supports 26, 26' différents ainsi qu'au moins un tronçon souple 14.3 reliant les premier et deuxième tronçons rigides 14.1, 14.2.

Selon un mode de réalisation non limitatif de l'invention, le deuxième système de liaison 30 comprend au moins un premier couple de première et deuxième biellettes 38, 40 reliant le support 26, 26' et l'enceinte 12. Comme illustré en détails sur la figure 6, la première biellette 38 est une biellette à deux points qui comprend une première extrémité 38.1 reliée par une première articulation 42.1 au support 26, 26', plus particulièrement à la deuxième face F32' du support 26, 26', ainsi qu'une deuxième extrémité 38.2 reliée par une deuxième articulation 42.2 à l'enceinte 12, plus particulièrement à un premier point d'ancrage solidaire de l'enceinte 12 ; les première et deuxième articulations 42.1, 42.2 comprenant chacune au moins un axe de pivotement, les axes de pivotement des première et deuxième articulations 42.1, 42.2 étant sensiblement parallèles entre eux. La deuxième biellette 40 est une biellette à trois points qui comprend une première extrémité 40.1 reliée par une première articulation 44.1 au support 26, 26', plus particulièrement à la deuxième face F32' du support 26, 26', ainsi qu'une deuxième extrémité 40.2 reliée par des deuxième et troisième articulations 44.2, 44.3 à l'enceinte 12, plus particulièrement à des premiers points d'ancrage solidaires de l'enceinte 12 ; les première, deuxième et troisième articulations 44.1, 44.2, 44.3 comprenant chacune au moins un axe de pivotement, les axes de pivotement des première, deuxième et troisième articulations 44.1, 44.2, 44.3 étant sensiblement parallèles entre eux. Bien entendu, l'invention n'est pas limitée à ce mode de réalisation pour le deuxième système de liaison 30. Selon un premier agencement visible sur les figures 5 et 6, le deuxième système de liaison 30 comprend un couple composé d'une première biellette à deux points 38 et d'une deuxième biellette à trois points 40 positionnées dans un même premier plan transversal, les axes de pivotement des premières, deuxièmes et troisième articulations 42.1, 42.2, 44.1, 44.2, 44.3 étant sensiblement parallèles entre eux et perpendiculaires au premier plan transversal. En complément, le deuxième système de liaison 30 comprend une liaison fixe 46 positionnée dans un deuxième plan transversal distinct du premier plan transversal.

Selon un deuxième agencement visible sur les figures 8 à 10, le deuxième système de liaison 30 comprend, pour chaque support 26, 26', un premier couple de première et deuxième biellettes 38, 40 positionnées dans un même plan longitudinal sensiblement coplanaire avec la plaque 32 du support 26, 26', les axes de pivotement des premières, deuxièmes et troisième articulations 42.1, 42.2, 44.1, 44.2, 44.3 des première et deuxième biellettes du premier couple étant sensiblement parallèles entre eux et perpendiculaires au plan longitudinal. Les première et deuxième biellettes 38, 40 du premier couple sont reliées à l'un des côtés latéraux 32.1, 32.2 de la plaque 32 du support 26, 26'. En complément, le deuxième système de liaison 30 comprend, pour chaque support 26, 26', un deuxième couple de première et deuxième biellettes 38' 40' positionnées dans des premier et deuxième plans transversaux, les axes de pivotement des premières, deuxièmes et troisième articulations des première et deuxième biellettes du deuxième couple étant sensiblement parallèles entre eux et perpendiculaires aux plans transversaux.

Bien entendu, l'invention n'est pas limitée à ces modes de réalisation pour les premier et deuxième systèmes de liaison 28, 30. Quel que soit le mode de réalisation, les premier et deuxième systèmes de liaison 28, 30 sont configurés pour obtenir une liaison isostatique entre l'élément cryogénique 14 et l'enceinte 12, limitant la transmission de contraintes entre l'élément cryogénique 14 et l'enceinte 12. Selon une configuration privilégiée, les premières, deuxièmes et troisième biellettes 38, 38', 40, 40' sont les plus longues possible de manière à augmenter le chemin de conduction thermique entre l'enceinte 12 et l'élément cryogénique 14.

Selon un mode de réalisation, en présence d'un support 26, 26', le premier système de liaison 28 comprend au moins un système de fixation 36 relié au support 26, 26' positionné dans un premier plan transversal, le deuxième système de liaison 30 comprenant au moins une articulation 42.1, 42.2, 44.1, 44.2, 44.3 le reliant au support 26, 26' positionnée dans un deuxième plan transversal décalé selon l'axe longitudinal X par rapport au premier plan transversal. Cet agencement contribue à augmenter la distance du chemin de conduction thermique entre les premiers points d'ancrage solidaires de l'enceinte 12 et les deuxièmes points d'ancrage solidaires de l'élément cryogénique 14.

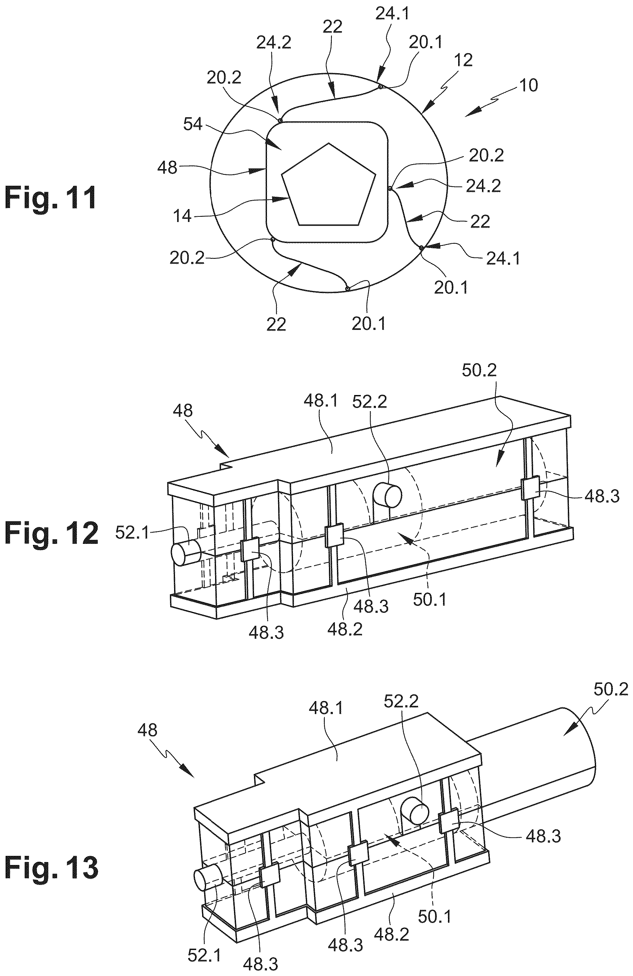

Selon d'autres modes de réalisation visibles sur les figures 11 à 13, le caisson cryogénique 10 comprend au moins un boîtier cryogénique 48 situé dans la zone intérieure ZI du caisson cryogénique 10 et dans lequel est positionné au moins un élément cryogénique 14. Ces modes de réalisation sont plus particulièrement adaptés pour les éléments cryogéniques 14 de masse importante.

Selon une configuration, le boîtier cryogénique 48 comprend au moins deux demi-coques 48.1, 48.2 configurées pour occuper un état assemblé dans lequel elles sont reliées et forment une enceinte close et un état détaché dans lequel elles sont séparées ainsi qu'au moins un système de verrouillage/déverrouillage 48.3 configuré pour occuper un état verrouillé dans lequel il maintient les demi-coques 48.1, 48.2 à l'état assemblé et un état déverrouillé dans lequel il permet aux demi-coques 48.1, 48.2 de passer de l'état assemblé à l'état détaché et inversement.

Le boîtier cryogénique 48 est réalisé en au moins un matériau thermiquement isolant.

Le boîtier cryogénique 48 est relié à l'enceinte 12 par des biellettes 22 comme l'élément cryogénique 14 visible sur les figures 1 à 4 ou par des biellettes 38, 38', 40, 40' comme le (ou les) support(s) 26, 26' visible(s) sur les figures 5 à 10.

Selon un mode de réalisation, l'élément cryogénique 14 positionné dans le boîtier cryogénique 48 comprend au moins une première partie 50.1, par exemple une pompe, en contact avec un fluide cryogénique ainsi qu'au moins une deuxième partie 50.2 qui n'est pas en contact avec le fluide cryogénique, comme un moteur par exemple.

Selon une première configuration visible sur la figure 12, l'élément cryogénique 14 (plus particulièrement ses première et deuxième parties 50.1, 50.2) est intégralement positionné dans le boîtier cryogénique 48.

Selon une deuxième configuration visible sur la figure 13, seule la première partie 50.1 de l'élément cryogénique 14 est située à l'intérieur du boîtier cryogénique 48, la deuxième partie 50.2 de l'élément cryogénique 14 étant située à l'extérieur du boîtier 48.

Selon un mode de réalisation, le boîtier cryogénique 48 comprend au moins un orifice 52.1 traversant au moins l'une des deux demi-coques 48.1, 48.2. Selon une configuration, le boîtier cryogénique 48 comprend au moins un premier orifice 52.1 configuré pour loger un premier conduit de fluide cryogénique ainsi qu'au moins un deuxième orifice 52.2 configuré pour loger un deuxième conduit de fluide cryogénique.

Selon un mode de réalisation, l'élément cryogénique 14 positionné dans le boîtier cryogénique 48 est relié à ce dernier par au moins un système de liaison configuré pour limiter les transferts thermiques ainsi que la transmission de contraintes entre l'élément cryogénique 14 et le boîtier cryogénique 48. De façon particulière, le système de liaison correspond en partie ou en totalité au boîtier cryogénique 48 lui-même. Dans un exemple de réalisation, le boîtier cryogénique 48 entoure l'élément cryogénique 14 avec lequel il est en contact sans liaison intermédiaire.

Selon une configuration, le boîtier cryogénique 48 contient un matériau thermiquement isolant 54 dans lequel est positionné l'élément cryogénique 14. Ce matériau thermiquement isolant 54 peut être un matériau en mousse.

Quel que soit le mode de réalisation, le caisson cryogénique 10 comprend au moins une enceinte 12 délimitant des zones intérieure et extérieure ZI, ZE ainsi qu'au moins un élément cryogénique 14 positionné dans l'enceinte 12. Cet élément cryogénique 14 peut être un conduit dans lequel circule un fluide cryogénique, un équipement en contact avec un fluide cryogénique, comme une pompe par exemple, ou un boîtier cryogénique contenant un élément en contact avec un fluide cryogénique. Le caisson cryogénique 10 comprend également au moins un premier point d'ancrage 20.1 solidaire de l'enceinte 12, au moins un deuxième point d'ancrage 20.2 solidaire de l'élément cryogénique 14 ainsi qu'au moins un système de liaison 18, 28, 30 comportant au moins un élément de liaison, comme une biellette 22, 38, 38', 40, 40', reliant directement ou indirectement les premier et deuxième points d'ancrage 20.1, 20.2. L'élément de liaison forme un chemin de conduction thermique qui présente une longueur D18 supérieure à une distance D20, mesurée en ligne droite, séparant les premier et deuxième points d'ancrage 20.1, 20.2. Cette solution permet d'augmenter la longueur D18 du chemin de conduction thermique entre l'enceinte 12 et l'élément cryogénique 14.

Selon des configurations, le caisson cryogénique 10 comprend plusieurs éléments de liaison comportant chacun une biellette 22 qui présente des première et deuxième extrémités 22.1, 22.2 reliées respectivement aux premier et deuxième points d'ancrage 20.1, 20.2.

Selon d'autres configurations, le caisson cryogénique 10 comprend au moins un support 26, 26', un premier système de liaison 28 reliant l'élément cryogénique 14 et le support 26, 26', ainsi qu'un deuxième système de liaison 30 reliant le support 26 et l'enceinte 12. Le premier système de liaison 28 comprend au moins un élément de liaison comme un montant 34 relié d'une part à l'élément cryogénique, plus particulièrement à au moins un deuxième point d'ancrage 20.2 solidaire de l'élément cryogénique, et d'autre part au support 26, 26'. Le deuxième système de liaison 30 comprend plusieurs éléments de liaison comme des biellettes 38, 38', 40 et 40', chacune d'elles étant reliée d'une part au support 26, 26' et d'autre part à l'enceinte 12, plus particulièrement à au moins un premier point d'ancrage 20.1 solidaire de l'enceinte 12.

## Revendications

1. Caisson cryogénique comprenant au moins une enceinte (12) délimitant des zones intérieure et extérieure (ZI, ZE), au moins un élément cryogénique (14) positionné dans la zone intérieure (ZI), choisi parmi un conduit, un équipement et un boîtier cryogénique contenant un élément cryogénique (14), au moins un premier point d'ancrage (20.1) solidaire de l'enceinte (12), au moins un deuxième point d'ancrage (20.2) solidaire de l'élément cryogénique (14) ainsi qu'au moins un système de liaison (18) comportant au moins un élément de liaison (22, 38, 38', 40, 40') reliant directement ou indirectement les premier et deuxième points d'ancrage (20.1, 20.2), l'élément de liaison (22, 38, 38', 40, 40') formant un chemin de conduction thermique qui présente une longueur (D18) supérieure à une distance (D20), mesurée en ligne droite, séparant les premier et deuxième points d'ancrage (20.1, 20.2),
le caisson cryogénique (10) comprenant au moins un support (26, 26'), un premier système de liaison (28) reliant l'élément cryogénique (14) et le support (26, 26') ainsi qu'un deuxième système de liaison (30) reliant le support (26) et l'enceinte (12),
**caractérisé en ce que** l'élément cryogénique (14) comprend au moins des premier et deuxième tronçons rigides (14.1, 14.2) reliés à des supports (26, 26') différents ainsi qu'au moins un tronçon souple (14.3) reliant les premier et deuxième tronçons rigides (14.1, 14.2).

2. Caisson cryogénique selon la revendication 1, **caractérisé en ce que** le premier système de liaison (28) comprend au moins un montant (34) relié de manière rigide à l'élément cryogénique (14) ainsi qu'au moins un système de fixation (36) reliant le montant (34) et le support (26, 26').

3. Caisson cryogénique selon la revendication précédente, **caractérisé en ce que** le système de fixation (36) comprend au moins un isolant thermique (36.2) intercalé entre le montant (34) et le support (26, 26').

4. Caisson cryogénique selon l'une des revendications 2 à 3, **caractérisé en ce que** le système de fixation (36) comprend un élément amortisseur (36.3) configuré pour autoriser un léger débattement entre le montant (34) et le support (26, 26').

5. Caisson cryogénique selon l'une des revendications 1 à 4, **caractérisé en ce que** le deuxième système de liaison (30) comprend au moins un premier couple de première et deuxième biellettes (38, 40) reliant le support (26, 26') et l'enceinte (12) ainsi que des articulations reliant les première et deuxième biellettes (38, 40) au support (26, 26') et à l'enceinte (12), chaque articulation présentant au moins un axe de pivotement.

6. Caisson cryogénique selon la revendication précédente, **caractérisé en ce que** le deuxième système de liaison (30) comprend :
- un couple de première et deuxième biellettes (38, 40) positionnées dans un même premier plan transversal, les axes de pivotement des articulations (42.1, 42.2, 44.1, 44.2, 44.3) étant sensiblement parallèles entre eux et perpendiculaires au premier plan transversal,
- une liaison fixe (46) positionnée dans un deuxième plan transversal distinct du premier plan transversal.

7. Caisson cryogénique selon la revendication 5, **caractérisé en ce que** le deuxième système de liaison (30) comprend, pour chaque support (26, 26'), :
- un premier couple de première et deuxième biellettes (38, 40) positionnées dans un même plan longitudinal, les axes de pivotement des articulations (42.1, 42.2, 44.1, 44.2, 44.3) des première et deuxième biellettes du premier couple étant sensiblement parallèles entre eux et perpendiculaires au plan longitudinal,
- un deuxième couple de première et deuxième biellettes (38' 40') positionnées dans des premier et deuxième plans transversaux, les axes de pivotement des articulations des première et deuxième biellettes du deuxième couple étant sensiblement parallèles entre eux et perpendiculaires aux plans transversaux.

8. Caisson cryogénique selon l'une des revendications 1 à 7, **caractérisé en ce que** le premier système de liaison (28) comprend au moins un système de fixation (36) relié au support (26, 26') et positionné dans un premier plan transversal, le deuxième système de liaison (30) comprenant au moins une articulation (42.1, 42.2, 44.1, 44.2, 44.3) le reliant au support (26, 26') et positionnée dans un deuxième plan transversal décalé par rapport au premier plan transversal.

9. Caisson cryogénique selon l'une des revendications précédentes, **caractérisé en ce que** le caisson cryogénique comprend au moins un boîtier cryogénique (48) situé dans la zone intérieure (ZI) du caisson cryogénique (10) et dans lequel est positionné au moins un élément cryogénique (14).

10. Caisson cryogénique selon la revendication précédente, **caractérisé en ce que** le boîtier cryogénique (48) comprend au moins deux demi-coques (48.1, 48.2) configurées pour occuper un état assemblé dans lequel les demi-coques (48.1, 48.2) sont reliées et forment une enceinte close et un état détaché dans lequel les demi-coques (48.1, 48.2) sont séparées ainsi qu'au moins un système de verrouillage/déverrouillage (48.3) configuré pour occuper un état verrouillé dans lequel il maintient les demi-coques (48.1, 48.2) à l'état assemblé et un état déverrouillé dans lequel il permet aux demi-coques (48.1, 48.2) de passer de l'état assemblé à l'état détaché et inversement.

11. Caisson cryogénique selon l'une des revendications 9 à 10, **caractérisé en ce que** l'élément cryogénique (14) positionné dans le boîtier cryogénique (48) comprend au moins une première partie (50.1) en contact avec un fluide cryogénique ainsi qu'au moins une deuxième partie (50.2) qui n'est pas en contact avec le fluide cryogénique, l'élément cryogénique (14) étant intégralement positionné dans le boîtier cryogénique (48).

12. Caisson cryogénique selon l'une des revendications 9 à 10, **caractérisé en ce que** l'élément cryogénique (14) positionné dans le boîtier cryogénique (48) comprend au moins une première partie (50.1) en contact avec un fluide cryogénique ainsi qu'au moins une deuxième partie (50.2) qui n'est pas en contact avec le fluide cryogénique, la première partie (50.1) de l'élément cryogénique (14) étant située à l'intérieur du boîtier cryogénique (48), la deuxième partie (50.2) de l'élément cryogénique (14) étant située à l'extérieur du boîtier (48).

13. Caisson cryogénique selon l'une des revendications 9 à 12, **caractérisé en ce que** le boîtier cryogénique (48) contient un matériau thermiquement isolant (54) dans lequel est positionné l'élément cryogénique (14).

14. Aéronef comprenant au moins un caisson cryogénique selon l'une des revendications 1 à 13.
